# EUROPÄISCHE PATENTSCHRIFT

(11) **EP 0 497 084 B1**
(45) Veröffentlichungstag und Bekanntmachung des Hinweises auf die Patenterteilung: **25.05.1994**
(21) Anmeldenummer: 92100037.8
(22) Anmeldetag: 03.01.1992
(51) Int. Cl.: F16B 37/02, F16B 37/04

(54) **Klammerartige Blechmutter**
Clamp-like sheet metal nut
Ecrou en tôle formant pince

(30) Priorität: 28.01.1991 DE 4102389
(43) Veröffentlichungstag der Anmeldung: 05.08.1992
(73) Patentinhaber: A. Raymond & Cie, F-38028 Grenoble-Cédex (FR)
(72) Erfinder: Boville, Daniel, F-75020 Paris (FR); Andre, Guy, F-10300 Saint Savine (FR)
(74) Vertreter: Kirchgaesser, Johannes, Dipl.-Ing.

(56) Entgegenhaltungen:
- DE-A- 3 917 314
- DE-B- 14 603
- GB-A- 1 311 046
- GB-A- 2 085 542
- US-A- 2 378 258

## Beschreibung

Die Erfindung bezieht sich auf eine klammerartige Blechmutter zum Verbinden von Platten, insbesondere von Kunststoffplatten, bestehend aus einem mit einer Gewindeprägung versehenen Gewindeschenkel, einem mit diesem über einen Steg C-förmig verbundenen Gegenschenkel mit einem Durchgangsloch für die einzudrehende Befestigungsschraube sowie einem weiteren Klemmschenkel zwischen den beiden Schenkeln, welcher am Gewindeschenkel auffederbar angeformt ist.

Eine derartige Blechmutter ist beispielsweise aus der DE 31 21 771 C2 (Fig.2) bekannt. Dort ist zwar ebenfalls zwischen dem Gewindeschenkel und dem Klemmschenkel ein weiterer Klemmschenkel angeordnet, welcher im Anlieferungszustand im Abstand parallel zum Gewindeschenkel verläuft, jedoch ist dieser mittlere Klemmschenkel - in Aufsteckrichtung gesehen - vom hinteren Ende des Gewindeschenkels nach vorne herumgebogen. Außerdem trägt dieser Klemmschenkel unterhalb der starren Gewindeprägung zwei gegeneinandergerichtete federnde Zungen, deren Kanten dem Gewinde der einzudrehenden Schraube angepaßt sind und deren Aufgabe es ist, die eingedrehte Schraube gegen selbsttätiges Lösen zu sichern.

Bei der Verwendung dieser Blechmutter zur Verbindung von Kunststoffplatten insbesondere bei Schaltkästen von Kraftfahrzeugen ergibt sich jedoch folgendes Problem: die Kunststoffplatten sind im Sommer oft einer starken Wärmestrahlung ausgesetzt. Hierbei nimmt die Widerstandskraft des Kunststoffes mit zunehmender Temperatur allmählich ab, so daß die zwischen den Klemmschenkeln eingespannte Oberfläche nachgibt und der ursprünglich feste Sitz auf der Trägerplatte gelockert wird. Die Folge sind klappernde Geräusche während der Fahrt.

Aufgabe der Erfindung ist es, die vorgenannte Blechmutter so zu gestalten, daß die Verbindung zwischen den beiden Platten auch bei Auftreten des Fließverhaltens infolge Wärmestrahlung sich nicht lockert und dadurch eine unerwünschte Geräuschbildung vermieden wird.

Diese Aufgabe wird bei der gattungsgemäßen Blechmutter dadurch gelöst, daß der mittlere Klemmschenkel - in Aufsteckrichtung gesehen - vom vorderen Ende des Gewindeschenkels nach hinten herumgebogen und mit einer Durchgangsöffnung für die Befestigungsschraube versehen ist, wobei dieser Klemmschenkel vorzugsweise bis etwa zur halben Aufstecktiefe schräg zum Gegenschenkel heruntergezogen ist und von dort ab etwa parallel zum unteren Klemmschenkel verläuft.

Nach einem weiteren Merkmal der Erfindung ist es ferner vorteilhaft, wenn der mittlere Klemmschenkel an seinem freien Ende einen etwa rechtwinklig zum Gewindeschenkel hin abgebogenen Steg aufweist, der sich im angezogenen Zustand der Schraube am Gewindeschenkel abstützt.

Diese baulichen Maßnahmen bieten den Vorteil, daß der mittlere Klemmschenkel nach dem Aufstecken der Blechmutter auf die zu haltende Kunststoffplatte und Verschrauben mit der darunterliegenden Trägerplatte stark hochgedrückt wird und sich mit dem abgewinkelten Steg am Gewindeschenkel abstützen kann. Dadurch wird von dem mittleren Klemmschenkel auf die Kunststoffplatte eine aus der Auffederung des Klemmschenkels resultierende Kraft ausgeübt, die im wesentlichen auch beibehalten wird, wenn der Kunststoff infolge Hitzeeinwirkung zu fließen beginnt und die Dicke der Kunststoffplatte daraufhin etwas abnimmt.

Der nach oben abgewinkelte Steg des Klemmschenkels ist hierbei besonders nützlich für das maschinelle Anziehen der Schrauben mittels eines sogenannten Bohrschraubers. Dieser stellt sich dann automatisch ab, wenn der abgewinkelte Steg sich am Gewindeschenkel abstützt, weil in diesem Augenblick das Anzugsdrehmoment sprunghaft ansteigt.

In der Zeichnung ist ein Ausführungsbeispiel der erfindungsgemäßen Blechmutter dargestellt, welches nachfolgend näher erläutert werden soll. Es zeigt
- Fig. 1: die klammerartige Blechmutter im Schnitt,
- Fig. 2: die Blechmutter nach dem Aufstecken auf die zu haltende Kunststoffplatte,
- Fig. 3: die montierte Blechmutter auf der Trägerplatte mit eingedrehter Schraube und
- Fig. 4: die montierte Blechmutter mit fest angezogener Schraube.

Die klammerartige Blechmutter besteht im wesentlichen aus einem mit einer Gewindeprägung 2 versehenen Gewindeschenkel 1, einem mit diesem über einen Steg 3 C-förmig verbundenen Gegenschenkel 4 mit einem Durchgangsloch 5 für die einzudrehende Befestigungsschraube 11 sowie einem weiteren Klemmschenkel 6 zwischen den beiden Schenkeln 1 und 4, welcher - in Aufsteckrichtung gesehen - am vorderen Ende 7 des Gewindeschenkels 1 angeformt und im Abstand von diesem Schenkel 1 nach hinten herumgebogen ist.

Der mittlere Klemmschenkel 6 ist bis etwa zur halben Aufstecktiefe schräg zum Gegenschenkel 4 heruntergezogen und verläuft von dort ab etwa parallel zu diesem in einem Abstand "a", welcher kleiner ist als die Dicke "d" einer zu haltenden Kunststoffplatte 12.

Der Klemmschenkel 6 weist zum Durchführen der Befestigungsschraube 11 ebenfalls eine Aussparung 8 auf und besitzt an seinem freien Ende 9 einen etwa rechtwinklig zum Gewindeschenkel 1 hin abgebogenen Steg 10, mit dem sich der Klemmschenkel 6 im angezogenen Zustand der Schraube 11 am Gewindeschenkel 1 abstützen kann.

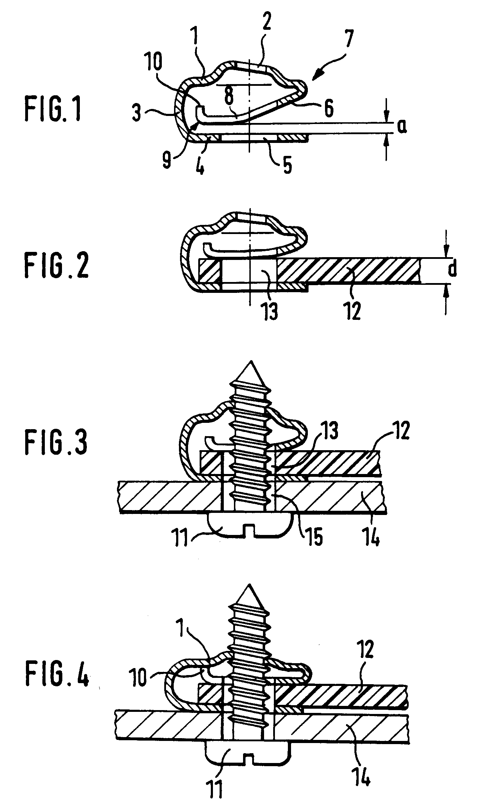

Die Wirkungsweise der erfindungsgemäßen Blechmutter ist aus den Figuren 2 bis 4 ersichtlich, welche den Montageablauf zeigen.

Zunächst wird die Blechmutter über den Rand der zu haltenden Kunststoffplatte 12 gesteckt, bis die Gewindeprägung 2 über dem Befestigungsloch 13 der Kunststoffplatte 12 angeordnet ist (Fig. 2).

Sodann wird die Blechmutter mit der eingesteckten Platte 12 mit der Trägerplatte 14 zusammengebracht, welche ebenfalls ein Befestigungsloch 15 aufweist. Durch die genau übereinanderliegenden Befestigungslöcher 13 und 15 wird nun die Befestigungsschraube 11 hindurchgeführt, dann in die Gewindeprägung 2 eingedreht (Fig. 3) und fest angezogen (Fig. 4).

Hierbei wird der Klemmschenkel 6 elastisch aufgefedert und drückt mit einer bestimmten Kraft auf die Kunststoffplatte 12. Falls nun der Kunststoff durch Hitzeeinwirkung weich wird und zu fließen beginnt, bleibt der Klemmschenkel 6 dennoch in engem Kontakt mit der nachgebenden Oberfläche der Kunststoffplatte, so daß die sichere Befestigung nicht verloren geht.

## Patentansprüche

1. Klammerartige Blechmutter zum Verbinden von Platten, vorzugsweise von Kunststoffplatten, bestehend aus einem mit einer Gewindeprägung versehenen Gewindeschenkel, einem mit diesem über einen Steg C-förmig verbundenen Gegenschenkel mit einem Durchgangsloch für die einzudrehende Befestigungsschraube sowie einem weiteren, mittleren Klemmschenkel zwischen den beiden Schenkeln, welcher am Gewindeschenkel auffederbar angeformt ist,
**dadurch gekennzeichnet,** daß
der mittlere Klemmschenkel (6) - in Aufsteckrichtung gesehen - vom vorderen Ende (7) des Gewindeschenkels (1) nach hinten herumgebogen und mit einer Durchgangsöffnung (8) für die Befestigungsschraube versehen ist.

2. Klammerartige Blechmutter nach Anspruch 1, dadurch gekennzeichnet, daß der mittlere Klemmschenkel (6) bis etwa zur halben Aufstecktiefe schräg zum Gegenschenkel (4) heruntergezogen ist und von dort ab etwa parallel zum unteren Klemmschenkel (4) verläuft.

3. Klammerartige Blechmutter nach Anspruch 2, dadurch gekennzeichnet, daß der mittlere Klemmschenkel (6) an seinem freien Ende (9) einen etwa rechtwinklig zum Gewindeschenkel (1) hin abgebogenen Steg (10) aufweist, der sich im angezogenen Zustand der Schraube (11) am Gewindeschenkel (1) abstützt.

## Claims

1. A clip-type sheet metal nut for connecting panels, preferably plastics panels, comprising a screwthread limb provided with a screwthread impression, a counterpart limb connected to the screwthread limb in a C-shape by way of a web portion and having a through hole for the fixing screw to be screwed in and a further central clipping limb between the two limbs, which is resiliently flexibly formed on the screwthread limb, characterised in that the central clipping limb (6) - as viewed in the fitting direction - is bent over rearwardly from the front end (7) of the screwthread limb (1) and is provided with a through opening (8) for the fixing screw.

2. A clip-type sheet metal nut according to claim 1 characterised in that the central clipping limb (6) is extended downwardly inclinedly relative to the counterpart limb (4) to about half the fitting depth and from there extends approximately parallel to the lower clipping limb (4).

3. A clip-type sheet metal nut according to claim 2 characterised in that at its free end (9) the central clipping limb (6) has a web portion (10) which is bent over approximately at a right angle towards the screwthread limb (1) and which in the tightened condition of the screw (11) bears against the screwthread limb (1).

## Revendications

1. Ecrou à agrafage pour vis Parker utilisé pour maintenir en position d'assemblage des plaques et notamment des panneaux en matière plastique, se composant d'une patte formant filetage munie d'une empreinte de filetage, d'une patte antagoniste reliée à la précédente, suivant une configuration en forme de C, par une barrette entretoise comportant un orifice de passage pour introduction de la vis de fixation à visser dans l'écrou, ainsi que d'une autre patte d'accrochage centrale disposée entre les deux pattes précitées, qui est réalisée solidaire par formage de la patte formant filetage dans des conditions lui permettant de se déformer élastiquement, **se caractérisant par le fait** que la patte d'accrochage centrale (6) se trouve, lorsqu'on observe l'ensemble depuis le sens d'emmanchement de la vis, repliée vers l'arrière depuis l'extrémité antérieure (7) de la patte formant filetage (1) et est munie d'une ouverture de passage (8) pour l'introduction de la vis de fixation.

2. Ecrou à agrafage pour vis Parker suivant la revendication 1, se caractérisant par le fait que la patte d'accrochage centrale (6) est repliée obliquement vers le bas en direction de la patte d'accrochage antagoniste (4) jusqu'à un niveau correspondant sensiblement à la moitié de la profondeur d'emmanchement et prend ensuite une orientation sensiblement parallèle au plan de la patte d'accrochage inférieure (4).

3. Ecrou à agrafage pour vis Parker suivant la revendication 2, se caractérisant par le fait que la patte d'accrochage centrale (6) comporte, au niveau de son extrémité libre (9) une barrette (10) repliée en direction de la patte formant filetage (1) suivant une disposition sensiblement à angle droit, qui vient prendre appui sur la patte formant filetage (1) lorsque la vis (11) est bloquée en position.
